# EUROPEAN PATENT APPLICATION

(11) **EP 2 802 132 A1**
(43) Date of publication of application: **12.11.2014**
(21) Application number: 14460025.1
(22) Date of filing: 30.04.2014
(51) Int. Cl.: H04M 3/38, H04M 3/22

(54) **Method and system for detecting the setting up of unwanted calls in a telecommunications network**

(30) Priority: 09.05.2013 PL 40382113
(71) Applicant: Orange Polska S.A., 02-326 Warszawa (PL)
(72) Inventor: Abramcyk, Piotr, 05-091 Zabki (PL); Jakubiak, Jaroslaw, 10-699 Olsztyn (PL); Florczak, Arkadiusz, 02-495 Warszawa (PL)
(74) Representative: Piotrowicz, Alicja

(57) **Abstract**

Details of calls made by internal and external subscribers of a telecommunications network are established by a service control module (1) and a subscriber device location module (11). Those details are checked for correctness in a subscriber event analyser (2), and then, they are transmitted to modules which process results of analyses for calls from the short-term log (12) and the long-term log (13). Modules which generate results of analyses for calls from the short-term log (15) and the long-term log (16) produce electric signals which set up parameters of a module blocking subscriber accounts (17).

## Description

The present invention relates to a method for detecting the setting up of unwanted calls in a telecommunications network and a system for detecting the setting up of unwanted calls in a telecommunications network, used particularly in cellular networks with architecture and network protocols enabling interactive services to internal and external subscribers.

The international patent document WO 2011080638 A1 describes a method and a platform for illegal carrier detection for detecting phone numbers which illegally transfer the traffic from abroad into the GSM system and for detecting undesirable setting up of calls in a domestic telecommunications network.

The European patent document EP 2466938 A1 discloses a method and apparatus for controlling data traffic in a wireless local area network using a wireless access point. The terminal of a wireless local area network, after receiving information from a source device on a fraudulent call, generates a message for a specific access point to temporarily prohibit communication over the wireless local area network.

The essence of the method for detecting the unwanted setting up of calls in a telecommunications network, according to the invention, consists in that a service control module is used for real-time interactive control of electric signals containing messages of subscriber calls made in the telecommunications network by internal and external subscribers, whereby the electric signals containing such messages are analysed in a subscriber event analyser. Then, the electric signals with analysed messages are stored in a subscriber event logging module, from which electric signals are selectively drawn separately for a newly-activated subscriber account log and for an outgoing call log.

The electric signals containing up-to-date messages on subscriber accounts, stored in the newly-activated subscriber account log, are transmitted simultaneously to a first unique outgoing call counter for short-term log data and to a second unique outgoing call counter for long-term log data. The electric signals containing data on the outgoing calls are drawn from the outgoing call log and are simultaneously transmitted to the short-term log of outgoing calls and to the long-term log of outgoing calls.

Then, the electric signals are transmitted from the short-term log of outgoing calls to the first unique outgoing call counter for short-term log data, and from the long-term log of outgoing calls to the second unique outgoing call counter for long-term log data. Both from the first unique outgoing call counter for short-term log data and from the second unique outgoing call counter for long-term log data the electric signals are sent to a subscriber device location module. In the subscriber device location module, electric signals containing location data of the subscriber devices are read and location indices are assigned, and, after that, the electric signals containing location data of the subscriber devices are transmitted simultaneously to a module which processes results of analyses for calls from the short-term log and to a module which processes results of analyses for calls from the long-term log.

Electric signals containing details of SIM card numbers of subscriber devices making fraudulent operations are drawn from a subscriber device suspicious location log, and those electric signals are simultaneously fed into the module which processes results of analyses for calls from the short-term log and into the module which processes results of analyses for calls from the long-term log, in which the electric signals are parameterised and correlations between them are established by comparing electric signals containing location details of subscribers executing legitimate procedures to electric signals containing location details of subscribers executing fraudulent procedures.

Electric signals processed that way are transmitted to a module which generates results of analyses for calls from the short-term log and to a module which generates results of analyses for calls from the long-term log, which produce electric signals which set up parameters of a module blocking subscriber accounts. Then, the electric signals generated in the module blocking subscriber accounts are fed into the subscriber account parameter log, and electric signals modified in the subscriber account parameter log are used to control the procedure of the service control module.

Preferably, in a short-term analysis of subscriber events more than 2 test calls are initiated with unique subscriber device numbers, in a time interval lasting up to 4 hours, and in a long-term analysis of subscriber events more than 2 test calls are initiated with unique subscriber device numbers, in a time interval determined by the operator based on unwanted calls in a unit of time.

The essence of the system for detecting the setting up of unwanted calls in a telecommunications network, according to the invention, consists in that the output interface of the service control module is connected to the input of the subscriber event logging module via the subscriber event analyser. The first output of the subscriber event logging module is connected, via the newly-activated subscriber account log, to the first input of the first unique outgoing call counter for short-term log data and to the first input of the second unique outgoing call counter for long-term log data. The second output of the subscriber event logging module is connected, via the outgoing call log, to the input of the short-term log of outgoing calls and to the input of the long-term log of outgoing calls. The output of the short-term log of outgoing calls to the operator is connected to the second input of the first unique outgoing call counter for short-term log data, and the output of the long-term log of outgoing calls is connected to the second input of the second unique outgoing call counter for long-term log data.

The output of the first unique outgoing call counter for short-term log data is connected to the first input of the subscriber device location module, and the output of the second unique outgoing call counter for long-term log data is connected to the second input of the subscriber device location module. The first output of the subscriber device location module is connected to the first input of the module which processes results of analyses for calls from the short-term log, and the second output of the subscriber device location module is connected to the first input of the module which processes results of analyses for calls from the long-term log.

The module which processes results of analyses for calls from the short-term log is connected, via an input/output interface, to the subscriber device suspicious location log, which is connected, via an input/output interface, to the module which processes results of analyses for calls from the long-term log. The output of the module which processes results of analyses for calls from the short-term log is connected, via a module which generates results of analyses for calls from the short-term log, to the first input of the module blocking subscriber accounts. The output of the module which processes results of analyses for calls from the long-term log is connected, via a module which generates results of analyses for calls from the long-term log, to the second input of the module blocking subscriber accounts. The output of the module blocking subscriber accounts is connected to the subscriber account parameter log which, in turn, is connected, via an input/output interface, to the service control module.

The main benefits of using the method and the system for detecting the setting up of unwanted calls in a telecommunications network, according to the invention, in relation to the existing state of the art, consist in immediate (real-time) detection of a telephone number, establishing the calendar date, the starting moment of the call and the connection, its duration, and the traffic profile of the SIM card of that telephone, and then, in an automatic blocking of the SIM card of the phone which makes illegal calls, thus preventing the loss of operator's profits resulting from the procedure of illegal setting up of calls.

An embodiment of the system for detecting the setting up of unwanted calls in a telecommunications network according to the invention is shown in the form of a block diagram.

In the embodiment of the method for detecting the setting up of unwanted calls in a telecommunications network according to the invention, the service control module 1 is used for real-time interactive control of electric signals containing messages of subscriber calls made within the telecommunications network by internal and external subscribers. Electric signals containing those messages are analysed in the subscriber event analyser 2 and the calendar date, the start and end time of an (legal or illegal) event and the traffic profile of the SIM card are determined. Then, the electric signals with the analysed messages are stored in the subscriber event logging module 3, from which electric signals are selectively drawn separately for the newly-activated subscriber account log 5 and for the outgoing call log 6.

The electric signals containing up-to-date messages of the subscriber accounts, stored in the newly-activated subscriber account log 5, are transmitted simultaneously to the first unique outgoing call counter for short-term log data 9 and to the second unique outgoing call counter for long-term log data 10, and the electric signals containing outgoing call data are drawn from the outgoing call log 6 and are simultaneously transmitted to the short-term log of outgoing calls 7 and to the long-term log of outgoing calls 8.

Then, the electric signals are transmitted from the short-term log of outgoing calls 7 to the first unique outgoing call counter for short-term log data 9, and the electric signals are transmitted from the long-term log of outgoing calls 8 to the second unique outgoing call counter for long-term log data 10, then, both from the first unique outgoing call counter for short-term log data 9 and from the second unique outgoing call counter for long-term log data 10 the electric signals are transmitted to the subscriber device location module 11, in which the electric signals containing location data of the subscriber devices are read and location indices are assigned, and, after that, the electric signals containing location data of the subscriber devices are transmitted simultaneously to the module which processes results of analyses for calls from the short-term log 12 and to the module which processes results of analyses for calls from the long-term log 13.

The electric signals containing details of SIM card numbers of subscriber devices making fraudulent operations are drawn from the subscriber device suspicious location log 14, and those electric signals are simultaneously fed into the module which processes results of analyses for calls from the short-term log 12 and into the module which processes results of analyses for calls from the long-term log 13, in which the electric signals are parameterised and correlations between them are established by comparing electric signals containing location details of subscribers making legitimate operations to electric signals containing location details of subscribers making fraudulent operations.

Then, the electric signals processed that way are transmitted to the module which generates results of analyses for calls from the short-term log 15 and to the module which generates results of analyses for calls from the long-term log 16, which produce the electric signals which set up parameters of the module blocking subscriber accounts 17, and next, the electric signals generated in the module blocking subscriber accounts 17 are fed into the subscriber account parameter log 4, and the electric signals modified in the subscriber account parameter log 4 are used to control the procedure of the service control module 1.

In a preferred embodiment of the system for detecting the setting up of unwanted calls in a telecommunications network, according to the invention, in the short-term analysis of subscriber events more than 2 test calls are initiated with unique subscriber device numbers, in a time interval lasting up to 4 hours, and in a long-term analysis of subscriber events more than 2 test calls are initiated with unique subscriber device numbers, in a time interval determined by the operator based on unwanted calls in a unit of time.

In an embodiment of the system for detecting the setting up of unwanted calls in a telecommunications network, according to the invention, the output interface of the service control module 1 is connected to the input of the subscriber event logging module 3 via the subscriber event analyser 2. The first output of the subscriber event logging module 3 is connected, via the newly-activated subscriber account log 5, to the first input of the first unique outgoing call counter for short-term log data 9 and to the first input of the second unique outgoing call counter for long-term log data 10. The second output of the subscriber event logging module 3 is connected, via the outgoing call log 6, to the input of the short-term log of outgoing calls 7 and to the input of the long-term log of outgoing calls 8. The output of the short-term log of outgoing calls 7 to the operator is connected to the second input of the first unique outgoing call counter for short-term log data 9, and the output of the long-term log of outgoing calls 8 is connected to the second input of the second unique outgoing call counter for long-term log data 10.

The output of the first unique outgoing call counter for short-term log data 9 is connected to the first input of the subscriber device location module 11, and the output of the second unique outgoing call counter for long-term log data 10 is connected to the second input of the subscriber device location module 110. The first output of the subscriber device location module 11 is connected to the first input of the module which processes results of analyses for calls from the short-term log 12, and the second output of the subscriber device location module 11 is connected to the first input of the module which processes results of analyses for calls from the long-term log 13.

The module which processes results of analyses for calls from the short-term log 12 is connected, via an input/output interface, to the subscriber device suspicious location log 14, which is connected, via an input/output interface, to the module which processes results of analyses for calls from the long-term log 13. The output of the module which processes results of analyses for calls from the short-term log 12 is connected, via the module which generates results of analyses for calls from the short-term log 15, to the first input of the module blocking subscriber accounts 17. The output of the module which processes results of analyses for calls from the long-term log 13 is connected, via the module which generates results of analyses for calls from the long-term log 16, to the second input of the module blocking subscriber accounts 17. The output of the module blocking subscriber accounts 17 is connected to the subscriber account parameter log 4 which, in turn, is connected, via an input/output interface, to the service control module 1.

The method and the system for detecting the setting up of unwanted calls in a telecommunications network, according to the invention, are suitable for real-time determination of the location of illegal calls and the traffic profile of the SIM card and for immediate generation of electric signals with settings which allow an effective blockade of a specific subscriber account, thus preventing the loss of operator's profits due to the procedure of fraudulent setting up of calls.

Even though the method and the system for detecting the setting up of unwanted calls in a telecommunications network, in particular a cellular network, according to the invention, have been described in three patent claims, presented as specific example embodiments in the description of the invention and shown in a figure, a person skilled in the field of methods and systems for detecting the setting up of unwanted calls in a telecommunications network will find it obvious that the presented data related to the method and the system for detecting the setting up of unwanted calls in a telecommunications network may not be construed as limiting the inventive idea to those data alone.

### List of referenced items

- 1: - service control module;
- 2: - subscriber event analyser;
- 3: - subscriber event logging module;
- 4: - subscriber account parameter log;
- 5: - newly-activated subscriber account log;
- 6: - outgoing call log;
- 7: - short-term log of outgoing calls;
- 8: - long-term log of outgoing calls;
- 9: - first unique outgoing call counter for short-term log data;
- 10: - second unique outgoing call counter for long-term log data;
- 11: - subscriber device location module;
- 12: - module which processes results of analyses for calls from the short-term log;
- 13: - module which processes results of analyses for calls from the long-term log;
- 14: - subscriber device suspicious location log;
- 15: - module which generates results of analyses for calls from the short-term log;
- 16: - module which generates results of analyses for calls from the long-term log;
- 17: - module blocking subscriber accounts.

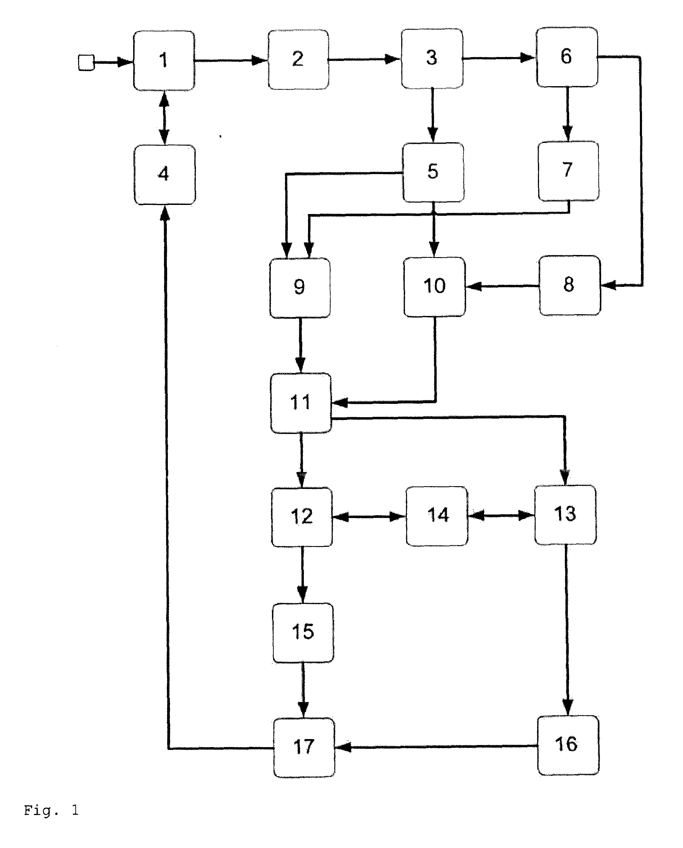

## Claims

1. A method for detecting the setting up of unwanted calls in a telecommunications network consisting in multi-stage control of electric signals carrying data on subscriber devices and on calls made by such devices, **characterised in that** a service control module (1) is used for real-time interactive control of electric signals containing messages of subscriber calls made in the telecommunications network by internal and external subscribers, whereby, the electric signals containing those messages are analysed in a subscriber event analyser (2), then the electric signals with the analysed messages are stored in a subscriber event logging module (3), from which the electric signals are selectively drawn separately for a newly-activated subscriber account log (5) and for an outgoing call log (6), and the electric signals containing up-to-date messages on subscriber accounts, stored in the newly-activated subscriber account log (5), are transmitted simultaneously to a first unique outgoing call counter for short-term log data (9) and to a second unique outgoing call counter for long-term log data (10), and the electric signals containing data of the outgoing calls are drawn from the outgoing call log (6) and they are simultaneously transmitted to a short-term log of outgoing calls (7) and to a long-term log of outgoing calls (8), then, the electric signals are transmitted from the short-term log of outgoing calls (7) to the first unique outgoing call counter for short-term log data (9), and the electric signals are transmitted from the long-term log of outgoing calls (8) to the second unique outgoing call counter for outgoing calls (8) to the second unique outgoing call counter for long-term log data (10), and then, both from the first unique outgoing call counter for short-term log data (9) and from the second unique outgoing call counter for long-term log data (10) the electric signals are sent to a subscriber device location module (11), in which the electric signals containing location data of the subscriber devices are read and location indices are assigned, and, after that, the electric signals containing location data of the subscriber devices are transmitted simultaneously to a module which processes results of analyses for calls from the short-term log (12) and to a module which processes results of analyses for calls from the long-term log (13), whereby, electric signals containing details of SIM card numbers of subscriber devices executing fraudulent procedures are drawn from a subscriber device suspicious location log (14), and those electric signals are simultaneously fed into the module which processes results of analyses for calls from the short-term call log (12) and into the module which processes results of analyses for calls from the long-term call log (13), in which the electric signals are parameterised and correlations between them are established by comparing electric signals containing location details of subscribers executing legitimate procedures to electric signals containing location details of subscribers executing illegal procedures, and then, the electric signals processed that way are transmitted to a module which generates results of analyses for calls from the short-term log (15) and to a module which generates results of analyses for calls from the long-term log (16), which produce electric signals which set up parameters of a module blocking subscriber accounts (17), and then, the electric signals generated in the module blocking subscriber accounts (17) are fed into a subscriber account parameter log (4), and the electric signals modified in the subscriber account parameter log (4) are used to control the procedure of the service control module (1).

2. The method of claim 1, **characterised in that** in a short-term analysis of subscriber events more than 2 test calls are initiated with unique subscriber device numbers, in a time interval lasting up to 4 hours, and in a long-term analysis of subscriber events more than 2 test calls are initiated with unique subscriber device numbers, in a time interval determined by the operator based on unwanted calls in a unit of time.

3. A system for detecting the setting up of unwanted calls in a telecommunications network comprising a device for controlling subscriber services, a subscriber device location log, a subscriber account log and a subscriber call counter, **characterised in that** the output interface of the service control module (1) is connected to the input of the subscriber event logging module (3) via the subscriber event analyser (2), while the first output of the subscriber event logging module (3) is connected, via the newly-activated subscriber account log (5), to the first input of the first unique outgoing call counter for short-term log data (9) and to the first input of the second unique outgoing call counter for long-term log data (10), and the second output of the subscriber event logging module (3) is connected, via the outgoing call log (6), to the input of the short-term log of outgoing calls (7) and to the input of the long-term log of outgoing calls (8), and the output of the short-term log of outgoing calls (7) to the operator is connected to the second input of the first unique outgoing call counter for short-term log data (9), and the output of the long-term log of outgoing calls (8) is connected to the second input of the second unique outgoing call counter for long-term log data (10), the output of the first unique outgoing call counter for short-term log data (9) is connected to the first input of the subscriber device location module (11) and the output of the second unique outgoing call counter for long-term log data (10) is connected to the second input of the subscriber device location module (11), while the first output of the subscriber device location module (11) is connected to the first input of the module which processes results of analyses for calls from the short-term log (12) and the second output of the subscriber device location module (11) is connected to the first input of the module which processes results of analyses for calls from the long-term log (13), and the module which processes results of analyses for calls from the short-term log (12) is connected, via an input/output interface, to the subscriber device suspicious location log (14), which is connected, via an input/output interface, to the module which processes results of analyses for calls from the long-term log (13), the output of the module which processes results of analyses for calls from the short-term log (12) is connected, via the module which generates results of analyses for calls from the short-term log (15), to the first input of the module blocking subscriber accounts (17), and the output of the module which processes results of analyses for calls from the long-term log (13) is connected, via the module which generates results of analyses for calls from the long-term log (16), to the second input of the module blocking subscriber accounts (17), and its output is connected to the subscriber account parameter log (4), with said subscriber account parameter log (4) connected, via an input/output interface, to the service control module (1).
